# FASCICULE DE BREVET EUROPEEN

(11) **EP 2 225 534 B1**
(45) Date de publication et mention de la délivrance du brevet: **28.09.2011**
(21) Numéro de dépôt: 08868533.4
(22) Date de dépôt: 19.12.2008
(51) Int. Cl.: G01C 19/56

(54) **PROCEDE DE MESURE PAR SYSTEME GYROSCOPIQUE**
MESSVERFAHREN MITHILFE EINES GYROSKOPISCHEN SYSTEMS
METHOD OF MEASUREMENT BY A GYROSCOPIC SYSTEM

(30) Priorité: 21.12.2007 FR 0760314
(43) Date de publication de la demande: 08.09.2010
(73) Titulaire: SAGEM Défense Sécurité, 75015 Paris (FR)
(72) Inventeur: LIGNON, Christian, F-75015 Paris (FR); CARRE, Arnauld, F-75015 Paris (FR)
(74) Mandataire: Cabinet Plasseraud
(86) Numéro de dépôt international: PCT/EP2008/068123
(87) Numéro de publication internationale: WO 2009/083519

(56) Documents cités:
- EP-A- 1 571 417
- EP-A- 1 752 733
- FR-A- 2 804 754

## Description

La présente invention est relative aux gyroscopes vibrants dont le principe repose sur l'effet de Coriolis et elle est plus particulièrement relative à la précision des valeurs d'angle de rotation fournies par ce type de gyroscope.

De tels gyroscopes vibrants sont classiquement utilisés dans des systèmes inertiels destinés à la navigation, comme cela est le cas par exemple pour un compas gyroscopique qui est adapté pour fournir une mesure d'angle par rapport à une direction de référence qui est celle du Nord géographique (Cap).

Les gyroscopes de type Coriolis Vibratory Gyroscopes (CVG) axisymétriques, par exemple de type Hemispherical Resonance Gyroscopes (HRG ou GRH) ou plus généralement dits de type I, tels que ceux décrits dans le document 'Type I and Type II micromachined vibratory gyroscopes' de Andrei M. Shkel, pages 586-593, IEEE/ION (pour 'Institute of Electrical and Electronics Engineer/ Institute Of Navigation' PLANS 2006, San Diego, CA, USA), fonctionnent en boucle ouverte et permettent de mesurer un angle de rotation absolu sur la base d'une mesure d'un angle représentant la position de vibration du gyroscope par rapport à des électrodes de mesure.

Un tel gyroscope peut aussi être utilisé en boucle fermée par le contrôle de la position de vibration via une commande de précession comme cela est décrit notamment dans le document FR 2 755 227.

Dans ce cas, la position de vibration du gyroscope est maintenue dans une position fixe, et la mesure est déduite à partir de la commande qu'il est nécessaire d'appliquer au gyroscope pour le maintenir dans cette position de vibration fixe. Ce type de fonctionnement est également appelé 'bouclage en gyromètre'. Les valeurs fournies par la mesure physique ne correspondent plus alors à un angle mais à une vitesse de rotation.

Les mesures fournies par ces gyroscopes vibrants peuvent être entachées d'erreurs qui sont essentiellement fonction de la position de la vibration par rapport aux électrodes de mesure. Ces erreurs sont donc variables en fonction de la position de vibration.

Ces erreurs ont pour effet de dégrader le niveau de précision des valeurs ainsi mesurées. Il est donc utile de chercher à réduire ces erreurs afin d'améliorer les performances de ce type de gyroscope.

Dans le contexte d'un fonctionnement en boucle fermée, ou encore d'un fonctionnement en gyromètre, le document EP 1 752 733 décrit une méthode visant à réduire de telles erreurs affectant les valeurs mesurées de manière à augmenter les performances de tels appareils de mesure.

Il se base à cet effet sur la symétrie des erreurs de tels gyromètres, entre deux positions de vibration distantes de 90° des dits gyromètres, pour proposer de réduire la valeur moyenne de ces erreurs en commandant un changement de position de vibration des gyromètres entre deux positions de vibration séparées de 90°.

Pendant la durée de la commutation d'une position de vibration à une autre, ce document prévoit d'utiliser un deuxième gyroscope en boucle fermée, ou encore gyromètre, pour fournir une mesure de vitesse de rotation à la place du premier gyromètre quand ce dernier est en train d'effectuer le changement de position de vibration et ne peut donc fournir une mesure pertinente de la vitesse de rotation à mesurer.

Toutefois, il convient de noter que les mesures fournies par un gyromètre présentent, par rapport aux mesures fournies par un gyroscope fonctionnant lui en boucle ouverte, une dégradation dans la précision de la mesure fournie qui est essentiellement liée aux incertitudes qui sont introduites par la transformation qui doit alors être appliquée à la commande pour obtenir une vitesse de rotation.

En outre, le document EP1 571 417 décrit un procédé de mesure par un système gyroscopique comprenant un gyroscope constitué d'une première poutre vibrante, en tant que premier moyen de mesure d'une vitesse angulaire selon un axe de mesure, adapté pour changer de position de vibration parmi deux positions de vibration et fournissant une première mesure de vitesse angulaire, une seconde poutre vibrante, en tant que second moyen de mesure de vitesse angulaire selon ledit axe de mesure et fournissant une seconde mesure de vitesse angulaire, procédé dans lequel:
- sur une première période de temps, le premier moyen de mesure vibrant dans une actuelle position de vibration dite première position fournit des premières mesures de vitesse angulaire tandis que le second moyen vibrant dans la même position de vibration reste en mode inactif,
- sur une deuxième période de temps, on commande le changement de position de vibration du premier moyen de mesure vers une seconde position de vibration, ledit premier moyen passant en mode inactif, tandis que le second moyen de mesure devient actif et fournit des secondes mesures de vitesse angulaire,
- sur une troisième période de temps, on commande le changement de position de vibration du second moyen de mesure vers la seconde position de vibration, ledit second moyen passant en mode inactif et le premier moyen de mesure vibrant dans la seconde position de vibration fournit des nouvelles premières mesures de vitesses angulaires.

La présente invention vise à pallier à ces inconvénients.

Un mode de réalisation de la présente invention porte sur les gyroscopes de type I.

La présente invention vise à améliorer la situation.

Un premier aspect de la présente invention propose un procédé de mesure par un système gyroscopique comprenant au moins :
- un gyroscope vibrant, en tant que premier moyen de mesure d'angle, adapté pour changer de position de vibration parmi une pluralité de positions de vibration, et pour fournir une première mesure de valeurs d'angle selon un axe de mesure dans l'une des positions de vibration de ladite pluralité de positions de vibration, ledit premier moyen de mesure présentant une première référence de zéro en tant que valeur d'angle ; et
- un second moyen de mesure d'angle adapté pour fournir une seconde mesure de valeurs d'angle selon ledit axe de mesure, ladite seconde mesure présentant une seconde référence de zéro en tant que valeur d'angle ;
ledit procédé de mesure comprenant les étapes suivantes pour mettre en oeuvre un changement de position de vibration du premier moyen de mesure d'angle :
/a/ sur une première période de temps, fournir à la fois des premières valeurs d'angle par le premier moyen de mesure d'angle vibrant dans une actuelle position de vibration de la pluralité de positions de vibration et des secondes valeurs d'angle par le second moyen de mesure d'angle ; et en déduire des secondes valeurs d'angle corrigées en adaptant la seconde référence de zéro sur la base d'une comparaison des premières et secondes valeurs d'angle obtenues sur ladite première période de temps ;
/b/ sur une deuxième période de temps, commander le changement de position de vibration du premier moyen de mesure d'angle depuis l'actuelle position vers une autre position de vibration de ladite pluralité de positions de vibration ;
/c/ sur une troisième période de temps, fournir à la fois des premières valeurs d'angle par le premier moyen de mesure d'angle et des secondes valeurs d'angle par le second moyen de mesure d'angle ; et en déduire des premières valeurs d'angle corrigées en adaptant la première référence de zéro sur la base d'une comparaison des premières et secondes valeurs d'angle obtenues sur ladite troisième période de temps.

Grâce à ces dispositions, on est en mesure de faire tourner la position de vibration du gyroscope vibrant, qui est utilisé en tant que premier moyen de mesure, tout en continuant de fournir des valeurs de mesure d'angle pertinentes.

En effet, tout d'abord, dans un tel système, le premier et le second moyen de mesure sont adaptés pour fournir des valeurs d'angle. Ainsi, il est avantageusement possible d'adapter les valeurs d'angle fournies par le premier moyen de mesure, respectivement par le second moyen de mesure, aux valeurs d'angles fournies par le second moyen de mesure, respectivement par le premier moyen de mesure. A cet effet, on prévoit d'adapter la première référence de zéro du premier moyen de mesure, respectivement la seconde référence de zéro du second moyen de mesure, à la seconde référence de zéro du second moyen de mesure, respectivement à la première référence de zéro du premier moyen de mesure.

En procédant ainsi, on peut donc fournir des valeurs d'angles cohérentes entre elles tout au long du processus de changement de position de vibration du gyroscope vibrant. En effet, que les valeurs d'angle mesurées soient fournies par le premier moyen de mesure d'angle ou par le second moyen de mesure d'angle, ces valeurs d'angle sont avantageusement corrigées par rapport à leurs zéros de référence respectivement utilisés.

Par conséquence, ici, on est en mesure de commander un changement de positions de vibration du gyroscope vibrant, ce qui permet de moyenner les erreurs qui sont respectivement attachées à chacune des positions de vibration du gyroscope vibrant, tout en continuant de fournir des valeurs d'angle cohérentes entre elles.

Il convient de noter qu'il n'est pas possible d'offrir une telle cohérence dans les valeurs de mesure fournies par un système de l'art antérieur puisque il s'agit de mesures de vitesse de rotation.

En procédant ainsi, les erreurs de mesure du premier moyen de mesure qui sont relatives aux positions de vibration du gyroscope vibrant, peuvent être avantageusement moyennées sur les différentes positions de vibration mises en oeuvre au niveau du gyroscope vibrant. La mesure d'angle peut être fournie par le premier moyen de mesure qui vibre dans une première position, puis, pendant qu'un changement de position de vibration est commandé sur le gyroscope vibrant depuis la première position de vibration vers une seconde position de vibration, la mesure d'angle peut alors être avantageusement fournie par le second moyen de mesure et après correction de ces valeurs d'angle par rapport aux différents zéros de référence des premier et second moyens de mesure.

Il convient de noter que le second moyen de mesure d'angle est un quelconque moyen de mesure d'angle.

Ainsi, dans de telles conditions, la mesure d'angle fournie par le gyroscope vibrant est alors fournie tantôt entachée d'erreurs qui sont relatives à la première position de vibration, tantôt entachée d'erreurs qui sont relatives à la seconde position de vibration.

Aucune limitation n'est attachée au nombre de positions de vibration dans lesquelles on prévoit de configurer le gyroscope vibrant.

A chaque changement de position de vibration, on peut avantageusement répéter les étapes /a/ à /c/ de sorte à obtenir des valeurs de mesure d'angles pertinentes et cohérentes selon un mode de réalisation de la présente invention.

Ainsi, le système gyroscopique peut fournir les valeurs d'angle suivantes :
- avant et pendant l'étape /a/ et après l'étape /c/, les valeurs d'angle fournies par le premier moyen de mesure d'angle ;
- lors des étapes /b/ et /c/, les valeurs d'angle fournies par le second moyen de mesure d'angle.

Un changement de position de vibration du premier moyen de mesure d'angle selon les étapes /a/ à /c/ peut alors être répété plusieurs fois successivement.

On peut en outre prévoir que, dans le cas où le gyroscope vibrant peut vibrer dans un nombre K de positions de vibration successives, un tel changement de position de vibration permettent de passer d'une position de vibration i à une position de vibration i+1, pour tout i compris entre 1 et K-1. A chaque répétition des étapes /a/ à /c/, la première position de vibration de l'étape /a/ correspond à la position de vibration dans laquelle vibre le gyroscope vibrant à la dernière étape /c/ effectuée et la seconde position de vibration correspond à la position de vibration suivante dans la pluralité de positions de vibration considérées.

Le système gyroscopique peut comprendre un nombre N de gyroscopes vibrants, N étant un nombre entier supérieur ou égal à 3. dans ce cas, les N gyroscopes sont adaptés pour changer de position de vibration parmi une pluralité de positions de vibration, et pour fournir des mesures respectives de valeurs d'angle selon des axes de mesure respectifs dans des positions de vibration respectives de ladite pluralité de positions de vibration. Le premier moyen de mesure peut correspondre alors à un quelconque des N gyroscopes vibrants ; et le second moyen de mesure peut correspondre à un ensemble de gyroscopes quelconque parmi les N-1 autres gyroscopes du système et est adapté pour fournir une mesure d'angle selon l'axe de mesure du premier moyen de mesure et relativement à la seconde référence de zéro.

Dans une telle architecture de système à gyroscopes vibrants, on est avantageusement en mesure d'appliquer la présente invention à tout ou partie de ces différents gyroscopes vibrants, alternativement, puisque le premier moyen de mesure peut correspondre successivement aux différents gyroscopes vibrants du système de mesure considéré.

Lorsque N est égal à 3, les trois gyroscopes vibrants peuvent présenter des axes de mesure respectifs coplanaires et non linéaires deux à deux.

Dans ce cas, on peut prévoir de définir un premier doublet de combinaisons linéaires différentes permettant de déterminer des valeurs d'angle suivant un premier axe de mesure, et un second doublet de combinaisons linéaires différentes permettant de déterminer des valeurs d'angle suivant un second axe de mesure. On peut ensuite appliquer le procédé de mesure selon un mode de réalisation de la présente invention pour chacun des doublets de combinaisons linéaires.

Au moins deux des axes de mesure peuvent être également sensiblement perpendiculaires.

Lorsque N est égal à 3 également ; les trois gyroscopes peuvent être situés dans un même plan de telle façon que les axes de mesure respectifs forment entre eux un angle sensiblement égal à 120°.

Lorsque N est égal à 4, les quatre gyroscopes peuvent être situés dans l'espace de telle façon que leurs axes de mesure respectifs soient orientés suivant les quatre trisectrices de l'espace.

Lorsque N est égal à 4 ; les quatre gyroscopes vibrants peuvent présenter des axes de mesure non coplanaires trois à trois et non colinéaires deux à deux.

On peut alors définir un premier doublet de combinaisons linéaires différentes permettant de déterminer des valeurs d'angle suivant un premier axe de mesure, et un deuxième doublet de combinaisons linéaires différentes permettant de déterminer des valeurs d'angle suivant un deuxième axe de mesure, et un troisième doublet de combinaisons linéaires différentes permettant de déterminer des valeurs d'angle suivant un troisième axe de mesure. On peut alors appliquer des étapes du procédé de mesure selon un mode de réalisation de la présente invention pour chacun des doublets de combinaisons linéaires.

Les positions de vibration de la pluralité de positions de vibration peuvent aussi être successivement séparées d'une valeur d'angle correspondant à 360 degrés divisé par un nombre entier.

Les positions de vibration de la pluralité de positions de vibration peuvent être déterminées afin de répartir les positions de vibration utilisées entre 0 et 2π radians.

Lorsque le système de mesure comprend quatre gyroscopes A, B, C et D sont situés dans l'espace de telle façon que leurs axes de mesure respectifs soient sensiblement orientés suivant les quatre trisectrices de l'espace, les doublets de combinaisons linéaires entre leurs quatre mesures respectivement notées a, b, c et d, utilisées afin de reconstituer trois axes de mesure sensiblement perpendiculaires sont les suivantes :
pour un premier axe de mesure x :
   a + b et -(c + d) ;
pour un deuxième axe de mesure y :
   b + c et -(a + d) ; et
pour un troisième axe de mesure z :
   a + c et -(b + d)

Les commandes de changement de position de la vibration peuvent être effectuées successivement sur chacun des gyroscopes vibrants.

On peut adapter les quatre gyroscopes vibrants de sorte que la relation suivante soit vérifiée :
a+b+c+ d = 0.

Les positions de vibration de la pluralité de positions de vibration peuvent être successivement séparées d'une valeur d'angle correspondant à 360 degrés divisé par un nombre entier.

On peut également prévoir de déterminer les positions de vibration de la pluralité de positions de vibration en temps réel afin de répartir les positions de vibration utilisées entre 0 et 360 degrés en tenant compte des positions de vibration déjà parcourues.

On peut également prévoir d'obtenir les premières et/ou secondes valeurs d'angle corrigées en prenant en outre en compte un facteur d'échelle.

Un second aspect de la présente invention propose un système gyroscopique de mesure adapté pour la mise en oeuvre d'un procédé selon le premier aspect de la présente invention.

Il comprend au moins :
- un gyroscope vibrant, en tant que premier moyen de mesure d'angle, adapté pour changer de position de vibration parmi une pluralité de positions de vibration, et pour fournir une première mesure de valeurs d'angle selon un axe de mesure dans l'une des positions de vibration de ladite pluralité de positions de vibration, ledit premier moyen de mesure présentant une première référence de zéro et fournissant des premières valeurs ; et
- un second moyen de mesure d'angle adapté pour fournir une seconde mesure de valeurs d'angle selon ledit axe de mesure, ladite seconde mesure présentant une seconde référence de zéro en tant que valeur d'angle et fournissant des secondes valeurs ;
ledit système gyroscopique comprenant en outre :
- une unité de correction des secondes valeurs d'angle, adaptée pour fournir des secondes valeurs corrigées en adaptant la seconde référence de zéro sur la base d'une comparaison de premières et secondes valeurs d'angle obtenues sur une période de temps ;
- une unité de correction des premières valeurs d'angle, adaptée pour fournir des premières valeurs corrigées en adaptant la première référence de zéro sur la base d'une comparaison de premières et secondes valeurs d'angle obtenues sur une autre période de temps ;
lesdites unités de correction des premières et secondes valeurs étant mises en oeuvre lors d'un changement de position de vibration d'au moins le premier moyen de mesure d'angle.

Les valeurs d'angle peuvent avantageusement être alternativement fournies par le premier moyen de mesure d'angle et par le second moyen de mesure d'angle lors d'un changement de position de vibration du premier moyen de mesure d'angle.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre les principales étapes d'un procédé de mesure par un système gyroscopique selon un mode de réalisation de la présente invention ;
- la figure 2 illustre l'évolution des valeurs de mesure fournies par un système gyroscopique selon un mode de réalisation de la présente invention ; et
- la figure 3 illustre un système gyroscopique selon un mode de réalisation de la présente invention.

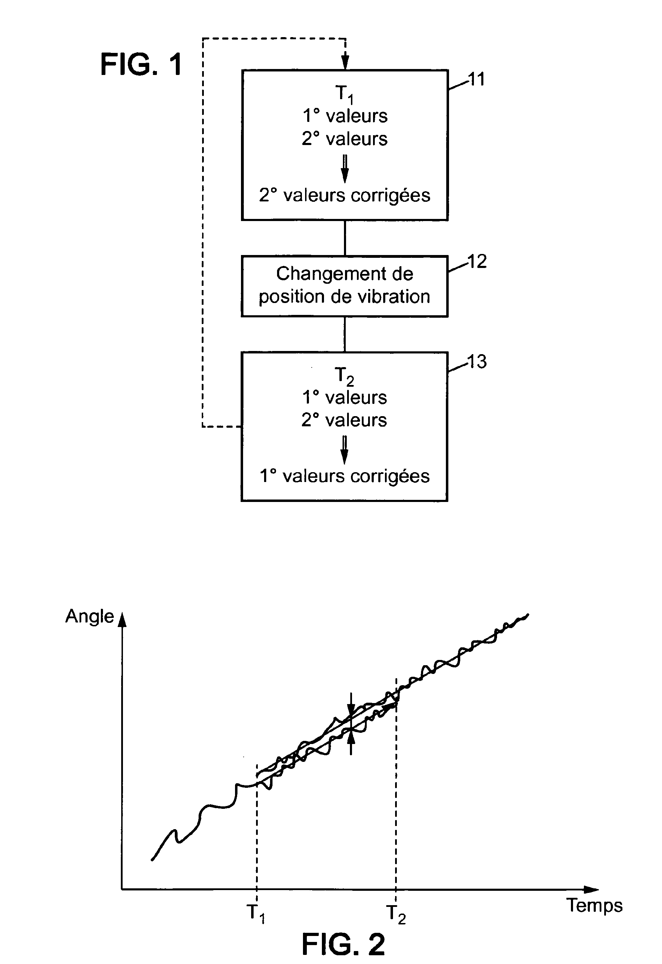

La figure 1 illustre les principales étapes d'un procédé de mesure par un système gyroscopique selon un mode de réalisation de la présente invention.

A une étape 11, pendant une période de temps T1, à la fois les premier et second moyens de mesure d'angle fournissent des valeurs, respectivement des premières et secondes valeurs d'angle. Sur la base de ces deux types de valeurs d'angle, on est alors en mesure de corriger les secondes valeurs d'angle, et la référence de zéro correspondante, de telle sorte à les rendre cohérentes avec les premières valeurs d'angle relatives à la référence de zéro associée.

Ainsi, on peut assurer une continuité angulaire dans les valeurs fournies par les premier et second moyens de mesure. On est ensuite en mesure d'opérer un changement de position de vibration du gyroscope vibrant qui constitue le premier moyen de mesure, puisque le système de mesure est en mesure de fournir des valeurs cohérentes, c'est-à-dire des valeurs d'angle corrigées, à partir de la mesure faite par le second moyen de mesure. A une étape 12, on effectue donc ce changement de position de vibration sur le gyroscope vibrant.

Suite à ce changement de position, on peut soit prévoir de continuer à fournir des valeurs d'angle issues du second moyen de mesure pendant une certaine période de temps, soit de fournir à nouveau des valeurs d'angle issues du premier moyen de mesure qui vibre alors dans une position de vibration différente. Aucune limitation n'est attachée à la présente invention au regard de cette certaine période de temps pendant laquelle on peut souhaiter fournir les secondes valeurs corrigées.

A l'étape 13, à nouveau, on prend en considération à la fois les premières et secondes valeurs d'angle de façon à pouvoir corriger les premières valeurs d'angle fournies qui sont fournies par le premier moyen de mesure vibrant dans la position de vibration commandée lors de son dernier changement.

La figure 2 illustre l'évolution des valeurs de mesure fournies par un système gyroscopique selon un mode de réalisation de la présente invention.

La variation des valeurs d'angle sont décrites en fonction du temps au fil des étapes du procédé de mesure.

Ici, avant un temps T₁, les valeurs d'angle sont fournies par le premier moyen de mesure. Puis entre le temps T₁ et T₂, on prend en considération les valeurs d'angle fournies par le premier moyen de mesure et celles fournies par le second moyen de mesure pour obtenir des secondes valeurs d'angle corrigées fournies à partir des valeurs fournies par le second moyen de mesure.

Cette période correspond donc à une période de recouvrement qui est utilisée pour la cohérence des valeurs d'angle fournies par le système au fil du temps.

Ensuite, lorsque cette période de recouvrement est passée, on peut commander un changement de position de vibration du premier moyen de mesure. En effet, le système de mesure fournit alors les secondes valeurs de mesure corrigées.

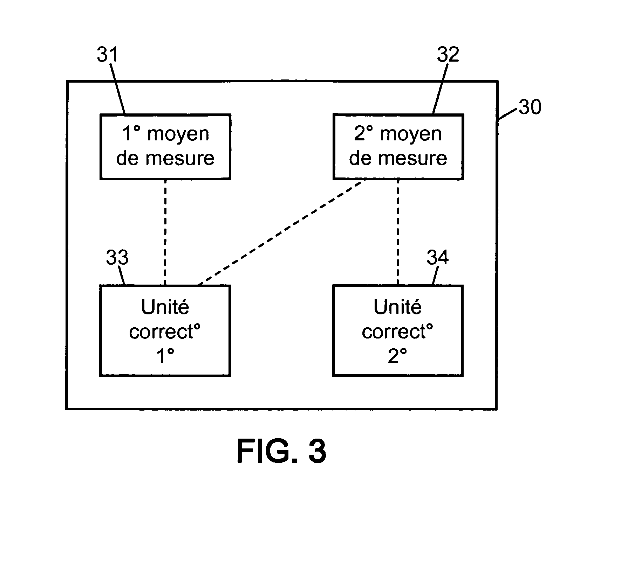

La figure 3 illustre un système gyroscopique de mesure selon un mode de réalisation de la présente invention.

Ce système comprend :
- un gyroscope vibrant 31 qui fournit des premières valeurs ; et
- un second moyen de mesure d'angle 32 qui fournit des secondes valeurs ;
- une unité de correction des secondes valeurs d'angle 34, adaptée pour fournir des secondes valeurs corrigées en adaptant la seconde référence de zéro sur la base d'une comparaison de premières et secondes valeurs d'angle obtenues sur une période de temps ;
- une unité de correction des premières valeurs d'angle 33, adaptée pour fournir des premières valeurs corrigées en adaptant la première référence de zéro sur la base d'une comparaison de premières et secondes valeurs d'angle obtenues sur une autre période de temps.

Les unités de correction des premières et secondes valeurs sont mises en oeuvre lors d'un changement de position de vibration d'au moins le premier moyen de mesure d'angle.

La pluralité des positions de vibration du gyroscope vibrant peut correspondre à K positions différentes. Le nombre entier K peut être choisi afin d'atteindre un optimum d'efficacité. Il convient ici de noter que l'amélioration de la performance obtenue par moyennage erreurs attachées aux différentes positions de vibration en appliquant le procédé de mesure selon un mode de réalisation, peut correspondre à une perte de précision associée au découpage de la durée globale de mesure en plusieurs périodes de mesures liées aux changements de positions de vibration successivement sur les K positions de vibration.

On peut également améliorer les performances du système est réglant le rapport la durée de recouvrement et la période de temps qui s'écoule entre deux changements de position de vibration. En effet, il s'agit de définir un compromis entre l'amélioration de la performance obtenue en moyennant des erreurs attachées aux différentes positions de vibration, et, la perte de performance liée au fait qu'à chaque commutation, on introduit une liée au bruit présent sur les premières et secondes valeurs d'angle pendant la durée de recouvrement.

Le système gyroscopique de mesure peut comprendre un nombre N de gyroscopes vibrants, N étant un nombre entier supérieur ou égal à 3 ; les N gyroscopes étant adaptés pour changer de position de vibration parmi une pluralité de positions de vibration, et pour fournir des mesures respectives de valeurs d'angle selon des axes de mesure respectifs dans des positions de vibration respectives de ladite pluralité de positions de vibration. Dans ce cas, le premier moyen de mesure peut correspondre à un quelconque des N gyroscopes vibrants, alors que le second moyen de mesure correspond, lui, à un ensemble de gyroscopes quelconque parmi les N-1 autres gyroscopes du système, adapté pour fournir une mesure d'angle selon l'axe de mesure du premier moyen de mesure et relativement à la seconde référence de zéro.

On peut prévoir plusieurs configurations différentes, à titre d'exemple, mais sans limiter les applications de la présente invention.

Ainsi, par exemple, lorsque N est égal à 3, les trois gyroscopes vibrants peuvent présenter des axes de mesure respectifs coplanaires et non linéaires deux à deux.

Lorsque N est égal à 3 ; les trois gyroscopes peuvent être situés dans un même plan de telle façon que les axes de mesure respectifs forment entre eux un angle sensiblement égal à 120°.

Lorsque N est égal à 4 ; les quatre gyroscopes peuvent être situés dans l'espace de telle façon que leurs axes de mesure respectifs soient orientés suivant les quatre trisectrices de l'espace.

Lorsque N est égal à 4 ; les quatre gyroscopes vibrants peuvent présenter des axes de mesure non coplanaires trois à trois et non colinéaires deux à deux.

Dans un mode de réalisation de la présente invention, on peut également prévoir que le second moyen de mesure comprend une pluralité de gyroscopes vibrants dans laquelle au moins un gyroscope vibrant est adapté pour changer de position de vibration, et pour fournir une mesure de valeurs d'angle. La mesure d'angle que fournit cet au moins un gyroscope vibrant peut alors être une combinaison linéaire des valeurs d'angle fournies par les autres gyroscopes du second moyen de mesure d'angle afin de correspondre à la seconde mesure de valeurs d'angle suivant l'axe de mesure souhaité.

Dans ce cas, on peut en outre prévoir d'effectuer une étape supplémentaire au cours du procédé de mesure. On peut ainsi prévoir de commander le changement de position de vibration d'un ou plusieurs des gyroscopes vibrants du second moyen de mesure d'angle depuis l'actuelle position vers une autre position de vibration de la pluralité de positions de vibration.

Le second moyen de mesure peut d'ailleurs être constitué de gyroscopes vibrants, chacun adapté pour changer de position de vibration.

Lorsque le premier moyen de mesure est un gyroscope vibrant et le second moyen de mesure est également un gyroscope vibrant, on peut prévoir que les deux gyroscopes vibrants aient leurs axes de mesure colinéaires.

Les sections suivantes décrivent une application de la présente invention à un contexte de calibration de gyroscope vibrant au sein d'une centrale inertielle fournissant une référence d'orientation.

A cet effet, on prévoit, dans un système gyroscopique comprenant au moins quatre gyroscopes non colinéaires, d'utiliser des mesures fournies par trois de ces quatre gyroscopes pendant que l'on procède au calibrage du quatrième gyroscope vibrant.

L'étape de calibration comprend le changement de position de vibration du gyroscope vibrant en cours de calibration. Ainsi, pendant qu'un des au moins quatre gyroscopes vibrants est en cours de calibration, les mesures fournies par les au moins trois autres gyroscopes vibrants sont utilisés pour fournir la référence d'orientation.

Plus précisément, l'opération de calibration consiste à placer la vibration dans diverses positions et à relever la mesure correspondante du gyroscope vibrant à calibrer. Il suffit ensuite de retrancher de ces mesures la rotation réelle du porteur mesurée par les trois autres gyroscopes.

On reconduit ensuite successivement cette opération pour l'ensemble des gyroscopes vibrants du système selon un mode de réalisation de la présente invention.

On peut prévoir que trois des gyroscopes vibrants sont orientés selon des trirectangles classiques et un quatrième gyroscope vibrant est orienté selon la trisectrice.

Ainsi, la calibration des gyroscopes peut être assurée successivement de la façon suivante.

On calcule, la différence D entre la mesure du gyroscope en cours de calibration et celle du second moyen de mesure qui comprend les trois autres gyroscopes vibrants. Ce calcul de D est réalisé pendant la période où l'on applique une commande de changement de position de vibration au gyroscope vibrant à calibrer.

D permet de connaître précisément l'angle dont a tourné la vibration alors même que le facteur d'échelle ayant servi à générer le changement de position n'est pas lui-même connu précisément. On peut alors retrancher cette rotation apparente mesurée par le gyroscope en cours de calibration des calculs de navigation.

Ce calcul est également réalisé pendant la période où l'on laisse la vibration dans une position donnée. De cette façon, en appliquant une commande de changement de position, la position de vibration peut être répartie en k positions et on enregistre la valeur de D pour chacune de ces k positions. On dispose ainsi de l'erreur de mesure du gyroscope en fonction de la position de la vibration ce qui permet de mettre à jour un modèle harmonique de dérive d'erreur.

Cette procédure permet d'utiliser toujours les 3 mêmes gyroscopes pour la navigation, les corrections étant introduites par l'intermédiaire de la mise à jour du modèle d'erreur correspondant, et ainsi d'éviter des transitoires de commutation sur les gyroscopes utilisés pour naviguer.

On peut avantageusement prévoir que, en cas de mouvement importants du porteur perturbant les positions prévues de la vibration, la mise à jour du modèle de dérive est annulée et reportée à une séquence ultérieure.

Par application des principes de la présente invention à une centrale inertielle, et au calibrage de gyroscopes vibrants dans cette centrale inertielle, on est en mesure de procéder à des calibrations à tout moment de manière transparente dans l'utilisation de la centrale. En effet, un tel système gyroscopique peut fournir une référence d'orientation alors même qu'un des gyroscopes vibrants est en cours de calibration.

## Revendications

1. Procédé de mesure par un système gyroscopique comprenant au moins :
- un gyroscope vibrant, en tant que premier moyen de mesure d'angle, adapté pour changer de position de vibration parmi une pluralité de positions de vibration, et pour fournir une première mesure de valeurs d'angle selon un axe de mesure dans l'une des positions de vibration de ladite pluralité de positions de vibration, ledit premier moyen de mesure présentant une première référence de zéro en tant que valeur d'angle ; et
- un second moyen de mesure d'angle adapté pour fournir une seconde mesure de valeurs d'angle selon ledit axe de mesure, ladite seconde mesure présentant une seconde référence de zéro en tant que valeur d'angle ;
ledit procédé de mesure comprenant les étapes suivantes pour mettre en oeuvre un changement de position de vibration du premier moyen de mesure d'angle :
/a/ sur une première période de temps, fournir à la fois des premières valeurs d'angle par le premier moyen de mesure d'angle vibrant dans une actuelle position de vibration de la pluralité de positions de vibration et des secondes valeurs d'angle par le second moyen de mesure d'angle ; et en déduire des secondes valeurs d'angle corrigées en adaptant la seconde référence de zéro sur la base d'une comparaison des premières et secondes valeurs d'angle obtenues sur ladite première période de temps ;
/b/ sur une deuxième période de temps, commander le changement de position de vibration du premier moyen de mesure d'angle depuis l'actuelle position vers une autre position de vibration de ladite pluralité de positions de vibration ;
/c/ sur une troisième période de temps, fournir à la fois des premières valeurs d'angle par le premier moyen de mesure d'angle et des secondes valeurs d'angle par le second moyen de mesure d'angle ; et en déduire des premières valeurs d'angle corrigées en adaptant la première référence de zéro sur la base d'une comparaison des premières et secondes valeurs d'angle obtenues sur ladite troisième période de temps.

2. Procédé de mesure selon la revendication 1, dans lequel, le système gyroscopique fournit les valeurs d'angle suivantes :
- avant et pendant l'étape /a/ et après l'étape /c/, les valeurs d'angle fournies par le premier moyen de mesure d'angle ;
- lors des étapes /b/ et /c/, les valeurs d'angle fournies par le second moyen de mesure d'angle.

3. Procédé de mesure selon la revendication 1 ou 2, dans lequel un changement de position de vibration du premier moyen de mesure d'angle selon les étapes /a/ à /c/ est répété plusieurs fois successivement.

4. Procédé de mesure selon l'une quelconque des revendications précédentes, ledit système gyroscopique comprenant un nombre N de gyroscopes vibrants, N étant un nombre entier supérieur ou égal à 3 ;
les N gyroscopes étant adaptés pour changer de position de vibration parmi une pluralité de positions de vibration, et pour fournir des mesures respectives de valeurs d'angle selon des axes de mesure respectifs dans des positions de vibration respectives de ladite pluralité de positions de vibration ; le premier moyen de mesure correspondant à un quelconque des N gyroscopes vibrants ; le second moyen de mesure correspondant à un ensemble de gyroscopes quelconque parmi les N-1 autres gyroscopes du système et étant adapté pour fournir une mesure d'angle selon l'axe de mesure du premier moyen de mesure et relativement à la seconde référence de zéro.

5. Procédé de mesure selon la revendication 4, dans lequel au moins deux des axes de mesure sont perpendiculaires.

6. Procédé de mesure selon la revendication 4, dans lequel N est égal à 3, lesdits 3 gyroscopes vibrants présentant des axes de mesure respectifs coplanaires et non linéaires deux à deux.

7. Procédé de mesure selon la revendication 4, dans lequel N est égal à 3 ; et
dans lequel les trois gyroscopes sont situés dans un même plan de telle façon que les axes de mesure respectifs forment entre eux un angle sensiblement égal à 120°.

8. Procédé de mesure selon la revendication 4, dans lequel N est égal à 4 ; et
dans lequel les quatre gyroscopes sont situés dans l'espace de telle façon que leurs axes de mesure respectifs soient orientés suivant les quatre trisectrices de l'espace.

9. Procédé de mesure selon la revendication 4, dans lequel N est égal à 4 ; lesdits quatre gyroscopes vibrants présentant des axes de mesure non coplanaires trois à trois et non colinéaires deux à deux.

10. Procédé de mesure selon l'une quelconque des revendications précédentes, dans lequel les positions de vibration de la pluralité de positions de vibration sont successivement séparées d'une valeur d'angle correspondant à 360 degrés divisé par un nombre entier.

11. Procédé de mesure selon l'une quelconque des revendications précédentes, dans lequel les positions de vibration de la pluralité de positions de vibration sont déterminées afin de répartir les positions de vibration utilisées entre 0 et 2π radians.

12. Procédé de mesure selon l'une quelconque des revendications précédentes, dans lequel les premières et/ou secondes valeurs d'angle corrigées sont obtenues en prenant en outre en compte un facteur d'échelle.

13. Système gyroscopique de mesure comprenant au moins :
- un gyroscope vibrant, en tant que premier moyen de mesure d'angle, adapté pour changer de position de vibration parmi une pluralité de positions de vibration, et pour fournir une première mesure de valeurs d'angle selon un axe de mesure dans l'une des positions de vibration de ladite pluralité de positions de vibration, ledit premier moyen de mesure présentant une première référence de zéro et fournissant des premières valeurs ; et
- un second moyen de mesure d'angle adapté pour fournir une seconde mesure de valeurs d'angle selon ledit axe de mesure, ladite seconde mesure présentant une seconde référence de zéro en tant que valeur d'angle et fournissant des secondes valeurs ;
ledit système gyroscopique comprenant en outre :
- une unité de correction des secondes valeurs d'angle, adaptée pour fournir des secondes valeurs corrigées en adaptant la seconde référence de zéro sur la base d'une comparaison de premières et secondes valeurs d'angle obtenues sur une période de temps ;
- une unité de correction des premières valeurs d'angle, adaptée pour fournir des premières valeurs corrigées en adaptant la première référence de zéro sur la base d'une comparaison de premières et secondes valeurs d'angle obtenues sur une autre période de temps ;
lesdites unités de correction des premières et secondes valeurs étant mises en oeuvre lors d'un changement de position de vibration d'au moins le premier moyen de mesure d'angle.

14. Système gyroscopique de mesure selon la revendication 13, dans lequel, les valeurs d'angle sont alternativement fournies par le premier moyen de mesure d'angle et par le second moyen de mesure d'angle lors d'un changement de position de vibration du premier moyen de mesure d'angle.

15. Système gyroscopique de mesure selon la revendication 13 ou 14, comprenant un nombre N de gyroscopes vibrants, N étant un nombre entier supérieur ou égal à 3 ;
les N gyroscopes étant adaptés pour changer de position de vibration parmi une pluralité de positions de vibration, et pour fournir des mesures respectives de valeurs d'angle selon des axes de mesure respectifs dans des positions de vibration respectives de ladite pluralité de positions de vibration ; le premier moyen de mesure correspondant à un quelconque des N gyroscopes vibrants ;
le second moyen de mesure correspondant à un ensemble de gyroscopes quelconque parmi les N-1 autres gyroscopes du système et étant adapté pour fournir une mesure d'angle selon l'axe de mesure du premier moyen de mesure et relativement à la seconde référence de zéro.

16. Système de mesure selon la revendication 15, dans lequel N est égal à 3, lesdits trois gyroscopes vibrants présentant des axes de mesure respectifs coplanaires et non linéaires deux à deux.

17. Système de mesure selon la revendication 15, dans lequel N est égal à 3 ; et dans lequel les trois gyroscopes sont situés dans un même plan de telle façon que les axes de mesure respectifs forment entre eux un angle sensiblement égal à 120°.

18. Système de mesure selon la revendication 15, dans lequel N est égal à 4 ; et dans lequel les quatre gyroscopes sont situés dans l'espace de telle façon que leurs axes de mesure respectifs soient orientés suivant les quatre trisectrices de l'espace.

19. Système de mesure selon la revendication 15, dans lequel N est égal à 4 ; lesdits quatre gyroscopes vibrants présentant des axes de mesure non coplanaires trois à trois et non colinéaires deux à deux.

## Claims

1. A method of measurement by a gyroscopic system comprising at least :
- a vibratory gyroscope, as first angle measurement means, designed to change its vibration position among a plurality of vibration positions and to deliver a first measurement of angle value along a measurement axis in one of the vibration positions of said plurality of vibration positions, said first measurement means having a first zero reference as angle value; and
- a second angle measurement means, designed to deliver a second measurement of angle values along said measurement axis, said second measurement having a second zero reference as angle value;
said measurement method comprising the following steps in order to implement a change in vibration position of the first angle measurement means:
/a/ over a first period of time, simultaneaously delivering first angle values by the first angle measurement means vibrating in a current vibration position from the plurality of vibration positions and second angle values by the second angle measurement means, and deducing corrected second angle values from these by adapting the second zero reference on the basis of a comparison of the first and second angle values obtained over said first period of time;
/b/ over a second period of time, ordering the changing of the vibration position of the first angle measurement means from the current position to another vibration position from said plurality of vibration positions;
/c/ over a third period of time, simultaneously delivering first angle values by the first angle measurement means and second angle values by the second angle measurement means, and deducing corrected first angle values from these by adapting the first zero reference on the basis of a comparison of the first and second angle values obtained over said third period of time.

2. Measurement method according to claim 1, in which the gyroscopic system delivers the following angle values :
- before and during the step /a/ and after the step /c/, the angle values delivered by the first angle measurement means;
- during the steps /b/ and /c/, the angle values delivered by the second angle measurement means.

3. Measurement method according to one of the previous claims, in which a change in vibration position of the first angle measurement means according to the steps /a/ to /c/ is repeated several times in succession.

4. Measurement method according to claim 1, said gyroscopic system comprising a number N of vibratory gyroscopes, N being an integer grater than or equal to 3;
the N gyroscopes being designed to change their vibration position among a plurality of vibration positions and to deliver respective measurements of angle values along respective measurement axes in respective vibration positions of said plurality of vibration positions; the first measurement means corresponding to any one on N vibratory gyroscopes; the second measurement means corresponding to any set of gyroscopes among the N-1 other gyroscopes of the system and being designed to deliver an angle measurement along the measurement axis of the first measurement means and relative to the second zero reference.

5. Measurement method according to claim 4, in which at least two of the measurement axes are perpendicular.

6. Measurement method according to claim 4, in which N is equal to 3, said three vibratory gyroscopes have two by two respectively coplanar and nonlinear measurement axes.

7. Measurement method according to claim 4, in which N is equal to 3; and
in which the three gyroscopes are situated in the same plane such that the respective measurement axes form an angle substantially equal to 120°.

8. Measurement method according to claim 4, in which N is equal to 4; and
in which the four gyroscopes are situated in space such that their respective measurement axes are oriented according to the four trisectors of space.

9. Measurement method according to claim 4, in which N is equal to 4; said fourvibratory gyroscopes having three by three noncoplanar and two by two noncolinear measurement axes.

10. Measurement method according to any one of the previous claims, in which the vibration positions of the plurality of vibration positions are successively separated by an angle value corresponding to 360° divided by an integer.

11. Measurement method according to any one of the previous claims, in which the vibration positions of the plurality of vibration positions are determined in order to distribute the vibration positions used between 0 and 2π radians.

12. Measurement method according to any one of the previous claims, in which the first and/or second corrected angle values are obtained by also taking a scale factor into account.

13. A gyroscopic measurement system comprising at least:
- a vibratory gyroscope, as first angle measurement means, designed to change its vibration position among a plurality of vibration positions and to deliver a first measurement of angle values along a measurement axis in one of the vibration positions of said plurality of vibration positions, said first measurement means having a first zero reference and delivering first values, and
- a second angle measurement means, designed to deliver a second measurement of angle values along said measurement axis, said second measurement having a second zero reference as angle value and delivering second values;
said gyroscopic system furthermore comprising :
- a unit correcting the second angle values, designed to deliver corrected second angle values by adapting the second zero reference on the basis of a comparison of the first and second angle values obtained over a period of time;
- a unit for correcting the first angle values, designed to deliver corrected first angle values by adapting the first zero reference on the basis of a comparison of the first and second angle values obtained over another period of time;
said units for correcting the first and second values being used during a change in vibration position of at least the first angle measurement means.

14. Gyroscopic measurement system according to claim 13, in which the angle values are alternately delivered by the first angle measurement means and by the second angle measurement means during a change in vibration position of the first angle measurement means.

15. Gyroscopic measurement system according to claim 13 or 14, comprising a number N of vibratory gyroscopes, N being an integer greater than or equal to 3;
the N gyroscopes being designed to change their vibration positions among a plurality of vibration positions and to deliver respective measurements of angle values along respective measurement axes in respective vibration positions of said plurality of vibration positions; the first measurement means corresponding to any one of N vibratory gyroscopes;
the second measurement means corresponding to any set of gyroscopes among the N-1 other gyroscopes of the system and being designed to deliver an angle measurement axis of the first measurement means and relative to the second zero reference.

16. Measurement system according to claim 15, in which N is equal to 3, said three vibratory gyroscopes having two by two respectively coplanar and nonlinear measurement axes.

17. Measurement system according to claim 15, in which N is equal to 3; and in which the three gyroscopes are situated in the same plane such that the respective measurement axes between them form an angle substantially equal to 120°.

18. Measurement system according to claim 15, in which N is equal to 4; and in which the four gyroscopes are situated in space such that their respective measurement axes are oriented according to the four trisectors of space.

19. Measurement system according to claim 15, in which N is equal to 4; said four vibratory gyroscopes having three by three noncoplanar and two by two noncolinear measurement axes.

## Patentansprüche

1. Verfahren zum Messen durch ein Gyroskopsystem, das zumindest umfasst:
- ein Schwingungsgyroskop als erstes Winkelmessmittel, das zum Ändern der Schwingungsposition unter mehreren Schwingungspositionen und zum Erbringen einer ersten Messung von Winkelwerten entlang einer Messachse in einer der Schwingungspositionen der mehreren Schwingungspositionen ausgelegt ist, wobei das erste Messmittel eine erste Nullreferenz als Winkelwert aufweist; und
- ein zweites Winkelmessmittel, das zum Erbringen einer zweiten Messung von Winkelwerten entlang der Messachse ausgelegt ist, wobei die zweite Messung eine zweite Nullreferenz als Winkelwert aufweist;
wobei das Messverfahren die folgenden Schritte umfasst, um eine Schwingungspositionsänderung des ersten Winkelmessmittels auszuführen:
/a/ in einem ersten Zeitraum Liefern sowohl von ersten Winkelwerten durch das erste Schwingungswinkelmessmittel in einer gegenwärtigen Schwingungsposition der mehreren Schwingungspositionen und von zweiten Winkelwerten durch das zweite Winkelmessmittel; und daraus Ableiten von korrigierten zweiten Winkelwerten durch Anpassen der zweiten Nullreferenz auf Basis eines Vergleichs der in dem ersten Zeitraum erhaltenen ersten und zweiten Winkelwerte;
/b/ in einem zweiten Zeitraum Steuern der Schwingungspositionsänderung des ersten Winkelmessmittels von der gegenwärtigen Position in eine andere Schwingungsposition der mehreren Schwingungspositionen;
/c/ in einem dritten Zeitraum Liefern sowohl von ersten Winkelwerten durch das erste Winkelmessmittel als auch von zweiten Winkelwerten durch das zweite Winkelmessmittel; und daraus Ableiten von korrigierten ersten Winkelwerten durch Anpassen der ersten Nullreferenz auf Basis eines Vergleichs der in dem dritten Zeitraum erhaltenen ersten und zweiten Winkelwerte.

2. Messverfahren nach Anspruch 1, in dem das Gyroskopsystem die folgenden Winkelwerte liefert:
- vor und während Schritt /a/ und nach Schritt /c/ die durch das erste Winkelmessmittel gelieferten Winkelwerte;
- in den Schritten /b/ und /c/ die durch das zweite Winkelmessmittel gelieferten Winkelwerte.

3. Messverfahren nach Anspruch 1 oder 2, in dem eine Schwingungspositionsänderung des ersten Winkelmessmittels gemäß den Schritten /a/ bis /c/ mehrere Male nacheinander wiederholt wird.

4. Messverfahren nach einem der vorangehenden Ansprüche, wobei das Gyroskopsystem eine Anzahl N von Schwingungsgyroskopen umfasst, wobei N eine ganze Zahl ist, die größer als oder gleich 3 ist;
wobei die N Gyroskope zum Ändern der Schwingungsposition unter mehreren Schwingungspositionen und zum Erbringen von jeweiligen Messungen von Winkelwerten gemäß jeweiliger Messachsen in jeweiligen Schwingungspositionen der mehreren Schwingungspositionen ausgelegt sind; wobei das erste Messmittel einem beliebigen der N Schwingungsgyroskope entspricht; das zweite Messmittel einer beliebigen Gesamtheit von Gyroskopen unter den N-1 anderen Gyroskopen des Systems entspricht und zum Erbringen einer Winkelmessung entlang der Messachse des ersten Messmittels und in Bezug auf die zweite Nullreferenz ausgelegt ist.

5. Messverfahren nach Anspruch 4, in dem mindestens zwei der Messachsen senkrecht sind.

6. Messverfahren nach Anspruch 4, in dem N gleich 3 ist, wobei die 3 Schwingungsgyroskope jeweilige Messachsen aufweisen, die paarweise koplanar und nicht linear sind.

7. Messverfahren nach Anspruch 4, in dem N gleich 3 ist; und
in dem die drei Gyroskope in ein und derselben Ebene liegen, so dass die jeweiligen Messachsen einen Winkel zwischen sich bilden, der im Wesentlichen gleich 120° ist.

8. Messverfahren nach Anspruch 4, in dem N gleich 4 ist; und
in dem die vier Gyroskope im Raum derart angeordnet sind, dass ihre jeweiligen Messachsen entlang der vier Trisektrizen des Raums orientiert sind.

9. Messverfahren nach Anspruch 4, in dem N gleich 4 ist; wobei die vier Schwingungsgyroskope Messachsen aufweisen, die dreierweise nicht koplanar sind und paarweise nicht kollinear sind.

10. Messverfahren nach einem der vorangehenden Ansprüche, in dem die Schwingungspositionen der mehreren Schwingungspositionen nacheinander um einen Winkelwert getrennt werden, der 360 Grad, dividiert durch eine ganze Zahl, entspricht.

11. Messverfahren nach einem der vorangehenden Ansprüche, in dem die Schwingungspositionen der mehreren Schwingungspositionen bestimmt werden, um die verwendeten Schwingungspositionen zwischen 0 und 2π rad zu verteilen.

12. Messverfahren nach einem der vorangehenden Ansprüche, in dem die ersten und/oder die zweiten korrigierten Winkelwerte erhalten werden, indem außerdem ein Skalierfaktor berücksichtigt wird.

13. Messgyroskopsystem, das zumindest umfasst:
- ein Schwingungsgyroskop als erstes Winkelmessmittel, das zum Ändern der Schwingungsposition unter mehreren Schwingungspositionen und zum Erbringen einer ersten Messung von Winkelwerten entlang einer Messachse in einer der Schwingungspositionen der mehreren Schwingungspositionen ausgelegt ist, wobei das erste Messmittel eine erste Nullreferenz aufweist und erste Werte liefert; und
- ein zweites Winkelmessmittel, das zum Erbringen einer zweiten Messung von Winkelwerten entlang der Messachse ausgelegt ist, wobei die zweite Messung eine zweite Nullreferenz als Winkelwert aufweist und zweite Werte liefert;
wobei das Gyroskopsystem außerdem umfasst:
- eine Einheit zur Korrektur der zweiten Winkelwerte, die zum Liefern von korrigierten zweiten Werten durch Anpassen der zweiten Nullreferenz auf Basis eines Vergleichs von in einem Zeitraum erhaltenen ersten und zweiten Winkelwerten ausgelegt ist;
- eine Einheit zur Korrektur der ersten Winkelwerte, die zum Liefern von korrigierten ersten Werten durch Anpassen der ersten Nullreferenz auf Basis eines Vergleichs von in einem anderen Zeitraum erhaltenen ersten und zweiten Winkelwerten ausgelegt ist;
wobei die Einheiten zur Korrektur der ersten und zweiten Werte bei einer Schwingungspositionsänderung zumindest des ersten Winkelmessmittels eingesetzt werden.

14. Messgyroskopsystem nach Anspruch 13, bei dem die Winkelwerte abwechselnd vom ersten Winkelmessmittel und vom zweiten Winkelmessmittel bei einer Schwingungspositionsänderung des ersten Winkelmessmittels geliefert werden.

15. Messgyroskopsystem nach Anspruch 13 oder 14 mit einer Anzahl N von Schwingungsgyroskopen, wobei N eine ganze Zahl ist, die größer als oder gleich 3 ist;
wobei die N Gyroskope zum Ändern der Schwingungsposition unter mehreren Schwingungspositionen und zum Erbringen von jeweiligen Messungen von Winkelwerten entlang jeweiliger Messachsen in jeweiligen Schwingungspositionen der mehreren Schwingungspositionen ausgelegt sind; wobei das erste Messmittel einem beliebigen der N Schwingungsgyroskope entspricht;
wobei das zweite Messmittel einer beliebigen Gesamtheit von Gyroskopen unter den N-1 anderen Gyroskopen des Systems entspricht und zum Erbringen einer Winkelmessung entlang der Messachse des ersten Messmittels und in Bezug auf die zweite Nullreferenz ausgelegt ist.

16. Messsystem nach Anspruch 15, bei dem N gleich 3 ist, wobei die drei Schwingungsgyroskope jeweilige Messachsen aufweisen, die paarweise koplanar und nicht linear sind.

17. Messsystem nach Anspruch 15, bei dem N gleich 3 ist; und bei dem die drei Gyroskope in ein und derselben Ebene liegen, so dass die jeweiligen Messachsen einen Winkel zwischen sich bilden, der im Wesentlichen gleich 120° ist.

18. Messsystem nach Anspruch 15, bei dem N gleich 4 ist; und bei dem die vier Gyroskope im Raum derart angeordnet sind, dass ihre jeweiligen Messachsen entlang der vier Trisektrizen des Raums orientiert sind.

19. Messsystem nach Anspruch 15, bei dem N gleich 4 ist; wobei die vier Schwingungsgyroskope Messachsen aufweisen, die dreierweise nicht koplanar und paarweise nicht kollinear sind.
